(19) **Europäisches Patentamt / European Patent Office / Office européen des brevets**

(11) **EP 3 174 246 B1**

(12) # EUROPEAN PATENT SPECIFICATION

(45) Date of publication and mention
of the grant of the patent:
**15.08.2018 Bulletin 2018/33**

(51) Int Cl.:
***H04L 12/24*** *(2006.01)*

(21) Application number: **15802912.4**

(86) International application number:
**PCT/CN2015/074541**

(22) Date of filing: **18.03.2015**

(87) International publication number:
**WO 2015/184886 (10.12.2015 Gazette 2015/49)**

(54) **METHOD AND DEVICE FOR SENDING BULK DATA ACQUISITION REQUEST**

VERFAHREN UND VORRICHTUNG ZUM SENDUNG EINER MASSENDATENERFASSUNGSANFRAGE

PROCÉDÉ ET DISPOSITIF POUR ENVOYER UNE REQUÊTE D'ACQUISITION DE DONNÉES EN MASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2014 CN 201410359789**

(43) Date of publication of application:
**31.05.2017 Bulletin 2017/22**

(73) Proprietor: **ZTE Corporation**
**Shenzhen, Guangdong 518057 (CN)**

(72) Inventor: **CHEN, Cheng**
**Shenzhen**
**Guangdong 518057 (CN)**

(74) Representative: **HGF Limited**
**4th Floor**
**Merchant Exchange**
**17-19 Whitworth Street West**
**Manchester M1 5WG (GB)**

(56) References cited:
**CN-A- 102 263 796      CN-A- 102 355 374**
**US-A1- 2006 235 971    US-B1- 7 302 486**
**US-B1- 8 509 117       US-B2- 8 564 409**

• **EDITOR OF THIS VERSION: R PRESUHN BMC SOFTWARE ET AL: "Version 2 of the Protocol Operations for the Simple Network Management Protocol (SNMP); rfc3416.txt", NETWORK WORKING GROUP RFC 1717, INTERNET SOCIETY (ISOC) 4, RUE DES FALAISES CH- 1205 GENEVA, SWITZERLAND, CH, 31 December 2002 (2002-12-31), XP015009210, ISSN: 0000-0003**

## Description

Technical Field

The present document relates to the field of communication, and particularly to a method and device for sending a bulk data acquisition request.

Background

In a network communication environment, a network element management system is mainly responsible for operations such as alarm management, security management, configuration management, performance management and the like over equipment. Herein configuration management and performance management require a large amount of Simple Network Management Protocol (SNMP) interaction with the equipment.

Common SNMP acquisition operations include SNMP Get, SNMP Get Next and SNMP Get Bulk, but the two operation manners of SNMP Get and SNMP Get Next have the problems of high frequency of interaction with a network element, relatively low efficiency and the like, and may not meet a requirement of an operator on efficient acquisition of bulk data, so that such a high efficient manner of SNMP Get Bulk is required to be used for acquisition of the bulk data.

SNMP Get Bulk is a method for acquiring bulk data of a network element Agent, defined in an SNMP. However, during practical use, there exist some limits. For example, when an operator manages a network, a router is not allowed to segment a packet in consideration of security, which limits a size of an SNMP message transmitted in a managed network. Equipment of each type has different capabilities in SNMP operation response processing, and a number of Object Identifiers (OIDs) returned for an SNMP Get Bulk request also has an upper limit.

An SNMP Get Bulk operation may rapidly acquire bulk network element data. However, in a practical commercial network environment, since a length of a data block acquired by the operation is usually set according to an experience and there exists a limit to packet segmentation for network transmission in an existing network and a limit to a processing capability of equipment, it may not be ensured that an operation result may be correctly returned for each SNMP Get Bulk operation. If a message response with an excessively large length may appear in a Get Bulk operation, the problems of response message error and redundant data may exist under the condition of existence of a network packet segmentation limit, and the accuracy of data acquisition may be influenced.

US 8,564,409 B2 discloses a method and apparatus for operating a server for an RFID reader by using both an SNMP command language and an RM/RP command language, and a method for operating an RFID reader are provided. The method for operating a server for an RFID reader includes: generating a mapping table including an object of an RFID reader, a management target, and an object identifier (OID) which are mapped to each other; checking and configuring the object of the RFID reader by using an simple network management protocol (SNMP) command language; and checking and configuring the object of the RFID reader by using a reader management/reader protocol (RM/RP) command language.

EDITOR OF THIS VERSION: R PRESUHN BMC SOFTWARE ET AL: "Version 2 of the Protocol Operations for the Simple Network Management Protocol (SNMP); rfc3416.txt", NETWORK WORKING GROUP RFC 1717, INTERNET SOCIETY (ISOC) 4, RUE DES FALAISES CH-1205 GENEVA, SWITZERLAND, CH, 31 December 2002 discloses version 2 of Simple Network Management Protocol elements of procedure for sending, PDUs. This document obsoletes RFC the protocol operations for the (SNMP). It defines the syntax and receiving, and processing SNMP 1905.

Summary

In order to solve the abovementioned problem, an embodiment of the present document provides a method and device for sending a bulk data acquisition request according to appended independent claims, which determine a maximum repetition number of the bulk data acquisition request according to an upper limit of a number of OIDs capable of being processed by equipment and information of OIDs corresponding to data to be acquired in the bulk data acquisition request, and send the maximum repetition number to the corresponding equipment at the same time of sending the bulk data acquisition request, thereby avoiding the problems of message error and data redundancy caused by an excessively large length of a message returned when the equipment responds to the bulk data acquisition request, ensuring data accuracy and also avoiding the problem of excessively high frequency of interaction with the equipment caused by an excessively small length of the returned message. Further improvements and embodiments are provided in the dependent claims.

Also provided is a method for sending a bulk data acquisition request, which includes that: OID information corresponding to data to be acquired in a bulk data acquisition request to be sent and a maximum number of OIDs capable of being processed by a network element which stores the data to be acquired are acquired, the OID information including a first number of OIDs corresponding to the data to be acquired; a current maximum repetition number of the bulk data acquisition request is determined according to the first number and the maximum number of the OIDs capable of being processed by the network element; and the bulk data acquisition request carrying the current maximum repetition number is sent to the network element.

In the abovementioned method for sending the bulk data acquisition request, after the step that the bulk data acquisition request carrying the current maximum repetition number is sent to the network element, the method further includes that: bulk data feedback information fed back by the network element in response to the bulk data acquisition request is received; when the bulk data feedback information does not carry the data to be acquired, a new maximum repetition number is reset for the bulk data acquisition request, the new maximum repetition number being smaller than the current maximum repetition number; and the bulk data acquisition request carrying the new maximum repetition number is sent to the network element.

In the abovementioned method for sending the bulk data acquisition request, the maximum number of the OIDs capable of being processed by the network element which stores the data to be acquired is acquired in the following manner: an equipment type of the network element is acquired according to an Internet Protocol (IP) address of the network element and a pre-stored corresponding relationship between IP addresses and equipment types; and a maximum number of OIDs capable of being processed corresponding to the equipment type is acquired according to a pre-stored corresponding relationship between an equipment type and a maximum number of OIDs capable of being processed.

In the abovementioned method for sending the bulk data acquisition request, the step that the current maximum repetition number of the bulk data acquisition request is determined according to the first number and the maximum number of the OIDs capable of being processed by the network element is specifically implemented as follows: the current maximum repetition number of the bulk data acquisition request is determined to be a rounded-up value of a ratio of the maximum number of the OIDs capable of being processed by the network element to the first number.

In the abovementioned method for sending the bulk data acquisition request, the OID information further includes parameter types corresponding to each OID, and after the step that the current maximum repetition number of the bulk data acquisition request is determined, the method further includes that: whether there exist OIDs of which parameter types are long-data types or not is judged according to the parameter types corresponding to each OID; and when there exist the OIDs of which the parameter types are the long-data types, the current maximum repetition number is regulated according to a second number of the OIDs of which the parameter types are the long-data types and the first number, otherwise the current maximum repetition number is kept unchanged.

In the abovementioned method for sending the bulk data acquisition request, the step that the current maximum repetition number is regulated according to the second number of the OIDs of which the parameter types are the long-data types and the first number includes that: a regulation weight of the current maximum repetition number is determined to be a ratio of the second number to the first number; and the current maximum repetition number is regulated according to the regulation weight of the current maximum repetition number.

In the abovementioned method for sending the bulk data acquisition request, the current maximum repetition number is regulated according to the regulation weight of the current maximum repetition number through the following formula: $R' = Max \{\lceil(1 - W) * R\rceil, R_0\}$, where $R'$ is a regulated current maximum repetition number, $W$ is the regulation weight of the current maximum repetition number, $R$ is the current maximum repetition number, $\lceil(1 - W) * R\rceil$ represents a rounded-up value of $(1 - W) * R$, and $R_0$ is a preset minimum value of the current maximum repetition number.

In the abovementioned method for sending the bulk data acquisition request, the long-data types include: a Display String type and/or an OCTET String type.

In the abovementioned method for sending the bulk data acquisition request, the step that the new maximum repetition number is reset for the bulk data acquisition request when the bulk data feedback information does not carry the data to be acquired is specifically implemented as follows: a maximum value is selected from a rounded-up value of a half of the current maximum repetition number and the preset minimum value of the current maximum repetition number, and is set to be the new maximum repetition number.

Also provided is a device for determining a maximum repetition number of a bulk data acquisition request, which includes: an acquisition module, arranged to acquire OID information corresponding to data to be acquired in a bulk data acquisition request and a maximum number of OIDs capable of being processed by a network element which stores the data to be acquired, the OID information including a first number of OIDs corresponding to the data to be acquired; a determination module, arranged to determine a current maximum repetition number of the bulk data acquisition request according to the first number and the maximum number of the OIDs capable of being processed by the network element; and a first sending module, arranged to send the bulk data acquisition request carrying the current maximum repetition number to the network element.

The abovementioned technical solutions of the embodiment of the present document have the following beneficial effects.

The embodiment of the present document provides a method and device for sending the bulk data acquisition request, the maximum repetition number of the bulk data acquisition request is determined according to an upper limit of a number of OIDs capable of being processed by equipment and information of an OID corresponding to data to be acquired in the bulk data acquisition request, and the maximum repetition number is sent to the corresponding equipment at the same time of sending the bulk data acquisition request, thereby avoiding the problems of message error and data redundancy caused by an excessively large length of a message returned when the equipment responds to the bulk data acquisition request, ensuring data accuracy and also avoiding the problem of excessively high frequency of interaction with the equipment caused by an excessively small length of the returned message.

Brief Description of Drawings

FIG. 1 is a flowchart of a method for sending a bulk data acquisition request according to embodiment 1 of the present document; and

FIG. 2 is a flowchart of a method for acquiring bulk data from a network element Agent by adopting a bulk data acquisition request provided by an embodiment of the present document.

Detailed description

In order to make the technical problem to be solved, technical solutions and advantages of the embodiment of the present document clearer, detailed descriptions will be made below with reference to the drawings and specific embodiments.

For the problem that it may not be ensured that a correct returned result is obtained when a bulk data acquisition request is used in a conventional art, the embodiment of the present document provides a method and device for sending a bulk data acquisition request, which determine a maximum repetition number of the bulk data acquisition request according to an upper limit of a number of OIDs capable of being processed by equipment and information of OIDs corresponding to data to be acquired in the bulk data acquisition request, and send the maximum repetition number to the corresponding equipment at the same time of sending the bulk data acquisition request, thereby avoiding the problems of message error and data redundancy caused by an excessively large length of a message returned when the equipment responds to the bulk data acquisition request, ensuring data accuracy and also avoiding the problem of excessively high frequency of interaction with the equipment caused by an excessively small length of the returned message.

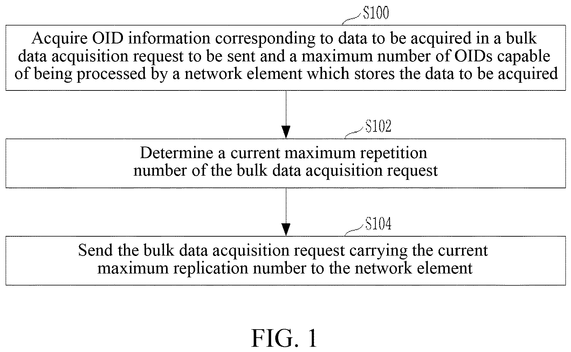

FIG. 1 is a flowchart of a method for sending a bulk data acquisition request provided by embodiment 1 of the present document. As shown in FIG. 1, the method includes:

Step S100: OID information corresponding to data to be acquired in a bulk data acquisition request to be sent and a maximum number of OIDs capable of being processed by a network element which stores the data to be acquired are acquired, the OID information including a first number of OIDs corresponding to the data to be acquired;

Step S102: a current maximum repetition number of the bulk data acquisition request is determined according to the first number and the maximum number of the OIDs capable of being processed by the network element; and

Step S104: the bulk data acquisition request carrying the current maximum repetition number is sent to the network element.

According to the abovementioned method for sending the bulk data acquisition request, the current maximum repetition number of the bulk data acquisition request is determined according to the first number of the OIDs corresponding to the data to be acquired in the bulk data acquisition request to be sent and a number of the OIDs capable of being processed by the network element which receives the bulk data acquisition request to be sent, and the current maximum repetition number is sent to the network element together with the bulk data acquisition request, herein the OID information corresponding to the data to be acquired may be acquired from parameter information of the bulk data acquisition request, and the parameter information may be set by a user. In the method for sending the bulk data acquisition request provided by the embodiment of the present document, the current maximum repetition number of the bulk data acquisition request is also sent to the network element at the same time of sending the bulk data acquisition request to the network element, and the current maximum repetition number is determined according to a processing capability of the network element, so that the network element may return the data to be acquired as much as possible within the processing capability of the network element when feeding back the data to be acquired, and the problem of data redundancy caused by an excessively large length of a returned message or the problem of requirement on multiple interactions for returning all the data to be acquired due to an excessively small length is avoided.

After the bulk data acquisition request is sent to the network element, the network element may feed back the data to be acquired in response to the bulk data acquisition request. However, due to a limit to network segmentation during network transmission, if the fed back data to be acquired is excessively large, the problem of response message error may be caused, and the accuracy of data acquisition may be influenced.

In order to solve the abovementioned technical problem, in a specific embodiment of the present document, after the abovementioned Step S104, the method may further include that: bulk data feedback information fed back by the network element in response to the bulk data acquisition request is received; when the bulk data feedback information does not carry the data to be acquired, a new maximum repetition number is reset for the bulk data acquisition request, the new maximum repetition number being smaller than the current maximum repetition number; and the bulk data acquisition request carrying the new maximum repetition number is sent to the network element.

A purpose of the abovementioned operation is that: when the received bulk data feedback information fed back by the network element does not carry the data to be acquired, that is, a response message has an error, the new maximum repetition number is set, and the new maximum repetition number is sent to the network element along with the bulk data acquisition request, so that the network element feeds back the data to be acquired according to the new maximum repetition number. Since the new maximum repetition number is smaller than the current maximum repetition number, the fed back data to be acquired is less than before, and the problem caused by the limit to packet segmentation during network transmission may be avoided. Of course, if bulk data feedback information fed back again by the network element still does not carry the data to be acquired, a smaller maximum repetition number may be reset again until the data to be acquired may be successfully acquired.

In a specific embodiment of the present document, the maximum number of the OIDs capable of being processed by the network element which stores the data to be acquired may be acquired in the following manner: an equipment type of the network element is acquired according to an IP address of the network element and a pre-stored corresponding relationship between IP addresses and equipment types; and a maximum number of OIDs capable of being processed corresponding to the equipment type is acquired according to a pre-stored corresponding relationship between an equipment type and a maximum number of OIDs capable of being processed.

In the abovementioned method for sending the bulk data acquisition request, the equipment type of the network element may be acquired through the pre-stored corresponding relationship between the IP address and the equipment type and the IP address of the network element, and because numbers of OIDs capable of being processed corresponding to each equipment type are determined, the maximum number of the OIDs capable of being processed by the network element may be acquired, herein the corresponding relationship between the IP address and the equipment type and the corresponding relationship between the equipment type and the maximum number of the OIDs capable of being processed may be stored in a configuration file, and the maximum number of the OIDs capable of being processed by the network element may be conveniently acquired according to the configuration file and the IP address of the network element.

In a specific embodiment of the present document, the abovementioned Step S102 may specifically be implemented as follows: the current maximum repetition number of the bulk data acquisition request is determined to be a rounded-up value of a ratio of the maximum number of the OIDs capable of being processed by the network element to the first number.

In the abovementioned method for sending the bulk data acquisition request, the current maximum repetition number is determined to be the rounded-up value of the ratio of the maximum number of the OIDs capable of being processed by the network element to the first number. For example, the maximum number of the OIDs capable of being processed by the network element is 210, the first number is 11, and then the current maximum repetition number is 20. Therefore, when the data is acquired from the network element through the bulk data acquisition request, since the current maximum repetition number is set to be 20, a number of OIDs which may be born by a piece of bulk data feedback information corresponding to the bulk data acquisition request is 220, all the OIDs capable of being processed by the network element may be included, and excessive data redundancy may be avoided.

On the contrary, if the current maximum repetition number is not set to be 20, for example, when the current maximum repetition number is set to be 10, a piece of bulk data feedback information corresponding to the bulk data acquisition request may bear only 110 OIDs, and if the data to be acquired is all the OIDs capable of being processed by the network element, all the data to be acquired may be acquired only by sending the bulk data acquisition request once again. When the current maximum repetition number is 30, a piece of bulk data feedback information corresponding to the bulk data acquisition request may bear only 310 OIDs, but totally only 210 OIDs may be processed by the network element, so that 100 OIDs born in the bulk data feedback information are redundant data.

Parameter types of OIDs may be divided into multiple types, and for example, may be short-data types Integer or Couter, and may also be long-data types. The number of bytes occupied by a long-data type is usually relatively larger, and for different OIDs belonging to the same long-data type, numbers of occupied bytes may also be greatly different. For example, when a maximum byte number of a long-data type is 200 bits, an OID1 of the long-data type may occupy 180 bits, while an OID2 of the long-data type may occupy only 2 bits. Therefore, when there exists a long-data type in parameter types of OIDs corresponding to the data to be acquired, the condition that a volume of data transmitted in a transmission process is excessively large because the long-data type occupies an excessive number of bytes may appear. In order to avoid the condition, when the long-data type exists, the current maximum repetition number may be regulated to avoid a problem caused by the long-data type.

In a specific embodiment of the present document, the OID information further includes parameter types corresponding to each OID, and after the abovementioned Step S102, the method may further specifically include that: whether there exist OIDs of which parameter types are long-data type or not is judged according to the parameter types corresponding to each OID; and when there exist the OIDs of which the parameter types are the long-data types, the current maximum repetition number is regulated according to a second number of the OIDs of which the parameter types are the long-data types and the first number, otherwise the current maximum repetition number is kept unchanged.

A purpose of the abovementioned operation is that: when there exist the OIDs of which the parameter types are the long-data types, the current maximum repetition number is regulated according to the number of the OIDs of the long-data types, to avoid excessive resources being occupied by the bulk data feedback information fed back by the network element according to the current maximum repetition number. Of course, a magnitude of a number of bytes occupied by the bulk data feedback information is related to a specific content of the feedback information, and when there exist the long-data types, the problem of occupation of excessive resources by the bulk data feedback information may not be certainly caused. Therefore, the abovementioned operation is only an optimal manner adopted to avoid a possible condition to ensure accuracy of the bulk data feedback information.

In the abovementioned method for sending the bulk data acquisition request, the step that the current maximum repetition number is regulated according to the second number of the OIDs of which the parameter types are the long-data types and the first number may specifically include that: a regulation weight of the current maximum repetition number is determined according to a ratio of the second number to the first number; and the current maximum repetition number is regulated according to the regulation weight of the current maximum repetition number.

The current maximum repetition number is regulated by taking a proportion of the number of the OIDs of the long-data types in the number of all the OIDs corresponding to the data to be acquired as a weight.

Specifically, the current maximum repetition number may be regulated according to the regulation weight of the current maximum repetition number through the following formula: $R' = Max \{\lceil (1 - W) * R \rceil, R_0\}$, where $R'$ is a regulated current maximum repetition number, $W$ is the regulation weight of the current maximum repetition number, $R$ is the current maximum repetition number, and $R_0$ is a preset minimum value of the current maximum repetition number.

The proportion of the OIDs of which the parameter types are the long-data types is usually not too high. Therefore, the current maximum repetition number may be regulated through a formula $R' = \lceil (1-W)*R \rceil$. However, in order to avoid that a purpose of acquiring bulk data may not be achieved because a regulated current maximum repetition number obtained by the formula is too small when the proportion of the OIDs of the long-data types is relatively larger, the regulated current maximum repetition number may be not smaller than the preset minimum value of the current maximum repetition number.

In the abovementioned method for sending the bulk data acquisition request, the long-data types include: a Display String type and/or an OCTET String type.

In a specific embodiment of the present document, the step that the new maximum repetition number is reset for the bulk data acquisition request when the bulk data feedback information does not carry the data to be acquired is specifically implemented as follows: a maximum value is selected from a rounded-up value of a half of the current maximum repetition number and the preset minimum value of the current maximum repetition number, and is set to be the new maximum repetition number.

When the response message has an error, the current maximum repetition number may be halved and rounded-up to obtain the new maximum repetition number. Of course, the new maximum repetition number may also be set to be any other value as long as being smaller than the current maximum repetition number and larger than or equal to the preset minimum value of the current maximum repetition number, to avoid that the purpose of acquiring the bulk data may not be achieved because that the new maximum repetition number is too small.

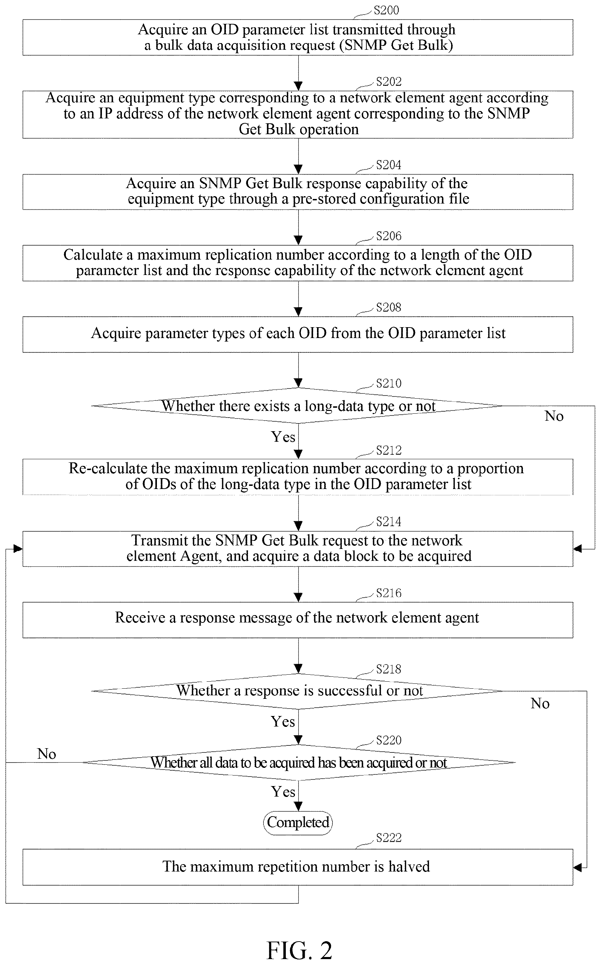

FIG. 2 is a flowchart of a method for acquiring bulk data from a network element Agent by adopting a bulk data acquisition request provided by an embodiment of the present document. As shown in FIG. 2, the method includes:

Step S200: an OID parameter list transmitted through a bulk data acquisition request SNMP Get Bulk is acquired;

Step S202: according to an IP address of a network element Agent corresponding to such an SNMP Get Bulk operation, an equipment type corresponding to the Agent is acquired;

Step S204: an SNMP Get Bulk response capability of the equipment type, i.e. a maximum number of OIDs capable of being processed when the Agent responds to the SNMP Get Bulk request, is acquired through a pre-stored configuration file;

Step S206: a maximum repetition number is calculated according to a length of the OID parameter list, i.e. a number of OIDs, and the response capability of the Agent, that is, the maximum repetition number is the response capability of the Agent/the length of the OID list;

Step S208: parameter types of each OID are acquired from the OID parameter list;

Step S210: whether there exists a long-data type such as Display String or OCTET String and the like in the parameter types of the OIDs in the OID parameter list or not is judged, Step S212 is executed if YES, otherwise Step S214 is executed;

Step S212: the maximum repetition number is recalculated according to a proportion of OIDs of the long-data type in the OID parameter list;

Step S214: the SNMP Get Bulk request is transmitted to the Agent, and a data block to be acquired is acquired;

Step S216: a response message of the Agent is received;

Step S218: whether the response message successfully responds or not is judged, Step S220 is executed if YES, otherwise Step S222 is executed;

Step S220: whether all data to be acquired has been acquired or not is judged, and if NO, Step S214 is executed; and

Step S222: the maximum repetition number is halved, and Step S214 is executed.

The embodiment of the present document also provides a device for determining a maximum repetition number of a bulk data acquisition request, which includes: an acquisition module, arranged to acquire OID information corresponding to data to be acquired in a bulk data acquisition request and a maximum number of OIDs capable of being processed by a network element which stores the data to be acquired, the OID information including a first number of OIDs corresponding to the data to be acquired; a determination module, arranged to determine a current maximum repetition number of the bulk data acquisition request according to the first number and the maximum number of the OIDs capable of being processed by the network element; and a first sending module, arranged to send the bulk data acquisition request carrying the current maximum repetition number to the network element.

Herein, the abovementioned device for sending the bulk data acquisition request further includes: a receiving module, arranged to receive bulk data feedback information fed back by the network element in response to the bulk data acquisition request; a resetting module, arranged to, when the bulk data feedback information does not carry the data to be acquired, reset a new maximum repetition number for the bulk data acquisition request, the new maximum repetition number being smaller than the current maximum repetition number; and a second sending module, arranged to send the bulk data acquisition request carrying the new maximum repetition number to the network element.

In the abovementioned device for sending the bulk data acquisition request, the acquisition module includes: a first acquisition unit, arranged to acquire an equipment type of the network element according to an IP address of the network element and a pre-stored corresponding relationship between IP addresses and equipment types; and a second acquisition unit, arranged to acquire a maximum number of OIDs capable of being processed corresponding to the equipment type according to a pre-stored corresponding relationship between an equipment type and a maximum number of OIDs capable of being processed.

In the abovementioned device for sending the bulk data acquisition request, the determination module is further arranged to determine the current maximum repetition number of the bulk data acquisition request to be a rounded-up value of a ratio of the maximum number of the OIDs capable of being processed by the network element to the first number.

In the abovementioned device for sending the bulk data acquisition request, the OID information further includes parameter types corresponding to each OID, and the device further includes: a judgment module, arranged to judge whether there exist OIDs of which parameter types are long-data types or not according to the parameter types corresponding to each OID; and a regulation module, arranged to, when there exist the OIDs of which the parameter types are the long-data types, regulate the current maximum repetition number according to a second number of the OIDs of which the parameter types are the long-data types and the first number, otherwise keep the current maximum repetition number unchanged.

In the abovementioned device for sending the bulk data acquisition request, the regulation module includes: a first determination unit, arranged to determine a regulation weight of the current maximum repetition number to be a ratio of the second number to the first number; and a regulation unit, arranged to regulate the current maximum repetition number according to the regulation weight of the current maximum repetition number.

In the abovementioned device for sending the bulk data acquisition request, the resetting module is further arranged to select a maximum value from a rounded-up value of a half of the current maximum repetition number and the preset minimum value of the current maximum repetition number, and set it to be the new maximum repetition number.

Industrial Applicability

According to the method and device for sending the bulk data acquisition request provided by the embodiment of the present document, a maximum repetition number of a bulk data acquisition request is determined according to an upper limit of a number of OIDs capable of being processed by equipment and information of OIDs corresponding to data to be acquired in the bulk data acquisition request, and the maximum repetition number is sent to the corresponding equipment at the same time of sending the bulk data acquisition request, thereby avoiding the problems of message error and data redundancy caused by an excessively large length of a message returned when the equipment responds to the bulk data acquisition request, ensuring data accuracy and also avoiding the problem of excessively high frequency of interaction with the equipment caused by an excessively small length of the returned message.

The above is the preferred implementation mode of the present document. It should be noted that those skilled in the art may further make a plurality of improvements and embellishments without departing from the principle of the present document, and these improvements and embellishments shall also fall within the scope of protection of the present document.

**Claims**

1. A method for sending a bulk data acquisition request, comprising:

   acquiring Object Identifier, OID, information corresponding to data to be acquired in a bulk data acquisition request to be sent and a maximum number of OIDs capable of being processed by a network element which stores the data to be acquired (S100), the OID information comprising a first number of OIDs corresponding to the data to be acquired;
   the method further comprises:

      determining a current maximum repetition number of the bulk data acquisition request according to the first number and the maximum number of the OIDs capable of being processed by the network element (S102); and
      sending the bulk data acquisition request carrying the current maximum repetition number to the network element (S104), wherein the OID information further comprises a parameter types corresponding to each OID, and after determining the current maximum repetition number of the bulk data acquisition request, the method further comprises:

         judging whether there exist OIDs of which parameter types are long-data types or not according to the parameter types corresponding to each OID; and when there exist the OIDs of which the parameter types are the long-data types, regulating the current maximum repetition number according to a second number of the OIDs of which the parameter types are the long-data types and the first number, otherwise keeping the current maximum repetition number unchanged.

2. The method according to claim 1, wherein after sending the bulk data acquisition request carrying the current maximum repetition number to the network element, further comprising:

   receiving bulk data feedback information fed back by the network element in response to the bulk data acquisition request;
   when the bulk data feedback information does not carry the data to be acquired, resetting a new maximum repetition number for the bulk data acquisition request, the new maximum repetition number being smaller than the current maximum repetition number; and
   sending the bulk data acquisition request carrying the new maximum repetition number to the network element.

3. The method according to claim 1, wherein the maximum number of the OIDs capable of being processed by the network element which stores the data to be acquired is acquired in the following manner:

   acquiring an equipment type of the network element according to an Internet Protocol, IP, address of the network element and a pre-stored corresponding relationship between IP addresses and equipment types; and
   acquiring a maximum number of OIDs capable of being processed corresponding to the equipment type according to a pre-stored corresponding relationship between an equipment type and a maximum number of OIDs capable of being processed.

4. The method according to claim 1, wherein determining the current maximum repetition number of the bulk data acquisition request according to the first number and the maximum number of the OIDs capable of being processed by the network element is specifically implemented by:
   determining the current maximum repetition number of the bulk data acquisition request to be a rounded-up value of a ratio of the maximum number of the OIDs capable of being processed by the network element to the first number.

5. The method according to claim 1, wherein regulating the current maximum repetition number according to the second number of the OIDs of which the parameter types are the long-data types and the first number comprises:

determining a regulation weight of the current maximum repetition number to be a ratio of the second number to the first number; and regulating the current maximum repetition number according to the regulation weight of the current maximum repetition number.

6. The method according to claim 5, wherein the current maximum repetition number is regulated according to the regulation weight of the current maximum repetition number through the following formula:

$$R' = Max\left\{\left\lceil\left(1 - W\right) * R\right\rceil, R_0\right\},$$

where $R'$ is a regulated current maximum repetition number, $W$ is the regulation weight of the current maximum repetition number, $R$ is the current maximum repetition number, $\lceil(1 - W) * R\rceil$ represents a rounded-up value of $(1 - W) * R$, and $R_0$ is a preset minimum value of the current maximum repetition number.

7. The method according to claim 1, wherein the long-data types comprise: a Display String type and/or an OCTET String type.

8. The method according to claim 6, wherein resetting the new maximum repetition number for the bulk data acquisition request when the bulk data feedback information does not carry the data to be acquired is specifically implemented by:
selecting a maximum value from a rounded-up value of a half of the current maximum repetition number and the preset minimum value of the current maximum repetition number, and setting it to be the new maximum repetition number.

9. A device for determining a maximum repetition number of a bulk data acquisition request, comprising:

an acquisition module, arranged to acquire Object Identifier, OID, information corresponding to data to be acquired in a bulk data acquisition request and a maximum number of OIDs capable of being processed by a network element which stores the data to be acquired, the OID information comprising a first number of OIDs corresponding to the data to be acquired;
the device further comprises:

a determination module, arranged to determine a current maximum repetition number of the bulk data acquisition request according to the first number and the maximum number of the OIDs capable of being processed by the network element; and
a first sending module, arranged to send the bulk data acquisition request carrying the current maximum repetition number to the network element,
wherein the OID information further comprises a parameter types corresponding to each OID, and the device further comprises:

a judgment module, arranged to judge whether there exist OIDs of which parameter types are long-data types or not according to the parameter types corresponding to each OID; and
a regulation module, arranged to, when there exist the OIDs of which the parameter types are the long-data types, regulat the current maximum repetition number according to a second number of the OIDs of which the parameter types are the long-data types and the first number, otherwise keep the current maximum repetition number unchanged.

**Patentansprüche**

1. Verfahren zum Senden einer Massendatenerfassungsanfrage, das Folgendes umfasst:

Erfassen von Objektkennungs(OID)-Informationen, die Daten entsprechen, die in einer Massendatenerfassungsanfrage, die gesendet werden soll, erfasst werden sollen, und einer maximalen Anzahl von OIDs, die in der Lage sind, von einem Netzwerkelement verarbeitet zu werden, das die Daten, die erfasst (S100) werden sollen, speichert, wobei die OID-Informationen eine erste Anzahl von OIDs umfassen, die Daten entsprechen, die erfasst werden sollen;
wobei das Verfahren ferner Folgendes umfasst:

Bestimmen einer aktuellen maximalen Wiederholungsanzahl der Massendatenerfassungsanfrage gemäß der ersten Anzahl und der maximalen Anzahl von OIDs, die in der Lage sind, von dem Netzwerkelement (S102) verarbeitet zu werden; und
Senden der Massendatenerfassungsanfrage, die die aktuelle maximale Wiederholungsanzahl trägt, an das Netzwerkelement (S104), wobei die OID-Informationen ferner Parameterarten umfassen, die jeder OID entsprechen, und wobei das Verfahren nach dem Bestimmen der aktuellen maximalen Wiederholungszahl der Massendatenerfassungsanfrage ferner Folgendes umfasst:

Beurteilen, ob OIDs existieren, deren Parameterarten Long Datentypen sind oder nicht gemäß den Parameterarten sind, die jeder der OIDs entsprechen; und

wenn die OIDs existieren, deren Parameterarten die Long Datentypen sind, Regulieren der aktuellen maximalen Wiederholungsanzahl gemäß einer zweiten Anzahl von OIDs, deren Parameterarten die Long Datentypen sind, und der ersten Anzahl, ansonsten unverändertes Beibehalten der aktuellen maximalen Wiederholungsanzahl.

2. Verfahren nach Anspruch 1, wobei nach dem Senden der Massendatenerfassungsanfrage, die die aktuelle maximale Wiederholungsanzahl trägt, an das Netzwerkelement, das Verfahren ferner Folgendes umfasst:

Empfangen von Massendatenfeedbackinformationen, die von dem Netzwerkelement als Reaktion auf die Massendatenerfassungsanfrage zurückgemeldet werden;

wenn die Massendatenfeedbackinformationen nicht die Daten tragen, die erfasst werden sollen, Umstellen auf eine neue maximale Wiederholungsanzahl für die Massendatenerfassungsanfrage, wobei die neue maximale Wiederholungsanzahl geringer ist als die aktuelle maximale Wiederholungsanzahl; und

Senden der Massendatenerfassungsanfrage, die die neue maximale Wiederholungsanzahl trägt, an das Netzwerkelement.

3. Verfahren nach Anspruch 1, wobei die maximale Anzahl von OIDs, die in der Lage sind, von dem Netzwerkelement verarbeitet zu werden, das die Daten speichert, die erfasst werden sollen, auf die folgende Weise erfasst wird:

Erfassen einer Geräteart des Netzwerkelements gemäß einer Internetprotokoll(IP)-Adresse des Netzwerkelements und einer vorgespeicherten entsprechenden Beziehung zwischen IP-Adressen und Gerätearten; und

Erfassen einer maximalen Anzahl von OIDs, die in der Lage sind, entsprechend der Geräteart gemäß einer vorgespeicherten entsprechenden Beziehung zwischen einer Geräteart und einer maximalen Anzahl von OIDs, die in der Lage sind, verarbeitet zu werden, verarbeitet zu werden.

4. Verfahren nach Anspruch 1, wobei das Bestimmen der aktuellen maximalen Wiederholungsanzahl der Massendatenerfassungsanfrage gemäß der ersten Anzahl und der maximalen Anzahl von OIDs, die in der Lage sind, von dem Netzwerkelement verarbeitet zu werden, besonders umgesetzt wird durch: Bestimmen, dass die aktuelle maximale Wiederholungsanzahl der Massendatenerfassungsanfrage ein gerundeter Wert eines Verhältnisses der maximalen Anzahl von OIDs, die in der Lage sind, von dem Netzwerkelement verarbeitet zu werden, zu der ersten Anzahl ist.

5. Verfahren nach Anspruch 1, wobei das Regulieren der aktuellen maximalen Wiederholungsanzahl gemäß der zweiten Anzahl von OIDs, deren Parameterarten die Long Datentypen sind, und der ersten Anzahl Folgendes umfasst:

Bestimmen, dass eine Regulierungsgewichtung der aktuellen maximalen Wiederholungsanzahl ein Verhältnis der zweiten Anzahl zu der ersten Anzahl ist; und

Regulieren der aktuellen maximalen Wiederholungsanzahl gemäß der Regulierungsgewichtung der aktuellen maximalen Wiederholungsanzahl.

6. Verfahren nach Anspruch 5, wobei die aktuelle maximale Wiederholungsanzahl gemäß der Regulierungsgewichtung der aktuellen maximalen Wiederholungsanzahl durch die folgende Formel reguliert wird:

$$R' = Max\{\lceil(1-W)*R\rceil, R_0\},$$

wobei $R'$ eine regulierte aktuelle maximale Wiederholungsanzahl ist, $W$ die Regulierungsgewichtung der aktuellen maximalen Wiederholungsanzahl ist, $R$ die aktuelle maximale Wiederholungsanzahl ist, $\lceil(1 - W) * R\rceil$ einen gerundeten Wert von $(1 - W) * R$, darstellt und $R_0$ ein voreingestellter minimaler Wert der aktuellen maximalen Wiederholungsanzahl ist.

7. Verfahren nach Anspruch 1, wobei die Long Datentypen Folgendes umfassen: einen Display-String-Typen und/oder einen OCTET-String-Typen.

8. Verfahren nach Anspruch 6, wobei das Umstellen auf die neue maximale Wiederholungsanzahl für die Massendatenerfassungsanfrage, wenn die Massendatenfeedbackinformationen die Daten, die erfasst werden sollen, nicht tragen, besonders umgesetzt wird durch:
Auswählen eines maximalen Werts von einem gerundeten Wert einer Hälfte der aktuellen maximalen Wiederholungsanzahl und dem voreingestellten minimalen Wert der aktuellen maximalen Wiederholungsanzahl; und diesen Einstellen, um die neue maximale Wiederholungsanzahl darzustellen.

9. Vorrichtung zum Bestimmen einer maximalen Wiederholungsanzahl einer Massendatenerfassungsanfrage, die Folgendes umfasst:

ein Erfassungsmodul, das angeordnet ist, um Objektkennungs(OID)-Informationen, die Daten entsprechen, die in einer Massendatenerfassungsanfrage erfasst werden sollen, und eine maximale Anzahl von OIDs zu erfassen, die in der Lage sind, von einem Netzwerkelement verarbeitet zu werden, das die zu erfassenden Daten speichert, wobei die OID-Informationen eine erste Anzahl von OIDs umfassen, die den zu erfassenden Daten entsprechen; wobei die Vorrichtung ferner Folgendes umfasst:

ein Bestimmungsmodul, das angeordnet ist, um eine aktuelle maximale Wiederholungsanzahl der Massendatenerfassungsanfrage gemäß der ersten Anzahl und der maximalen Anzahl von OIDs, die in der Lage sind, von dem Netzwerkelement verarbeitet zu werden, zu bestimmen; und ein erstes Sendemodul, das angeordnet ist, um die Massendatenerfassungsanfrage, die die aktuelle maximale Wiederholungsanzahl trägt, an das Netzwerkelement zu senden, wobei die OID-Informationen ferner Parameterarten umfassen, die jeder der OIDs entsprechen, und wobei die Vorrichtung ferner Folgendes umfasst:

ein Beurteilungsmodul, das angeordnet ist, um zu beurteilen, ob OIDs existieren, deren Parameterarten Long Datentypen sind oder die nicht gemäß den Parameterarten sind, die jeder OID entsprechen; und ein Regulierungsmodul, das angeordnet ist, um, wenn die OIDs existieren, deren Parameterarten die Long Datentypen sind, die aktuelle maximale Wiederholungsanzahl gemäß einer zweiten Anzahl von OIDs, deren Parameterarten die Long Datentypen sind, und der ersten Anzahl zu regulieren, und ansonsten die aktuelle maximale Wiederholungsanzahl unverändert beizubehalten.

## Revendications

1. Procédé d'envoi d'une demande d'acquisition de données non traitées, comprenant :

l'acquisition d'informations d'identifiants d'objets, OID, correspondant à des données à acquérir lors d'une demande d'acquisition de données non traitées à envoyer et à un nombre maximal d'OID pouvant être traités par un élément de réseau qui mémorise les données à acquérir (S100), les informations d'OID comprenant un premier nombre d'OID correspondant aux données à acquérir ; le procédé comprenant en outre :

la détermination d'un nombre maximal courant de répétitions de la demande d'acquisition de données non traitées conformément au premier nombre et au nombre maximal des OID pouvant être traités par l'élément de réseau (S102) ; et l'envoi de la demande d'acquisition de données non traitées véhiculant le nombre maximal courant de répétitions à l'élément de réseau (S104), dans lequel les informations d'OID comprennent en outre des types de paramètre correspondant à chaque OID, et après la détermination du nombre maximal courant de répétitions de la demande d'acquisition de données non traitées, le procédé comprenant en outre :

l'évaluation de l'existence éventuelle d'OID dont les types de paramètre sont des types de données longues conformément aux types de paramètre correspondant à chaque OID ; et en présence des OID dont les types de paramètre sont des types de données longues, la régulation du nombre maximal courant de répétitions conformément à un second nombre des OID dont les types de paramètre sont des types de données longues et au premier nombre, autrement, la conservation du nombre maximal courant de répétitions inchangé.

2. Procédé selon la revendication 1, dans lequel, après l'envoi de la demande d'acquisition de données non traitées véhiculant le nombre maximal courant de répétitions à l'élément de réseau, le procédé comprend en outre :

la réception d'informations de rétroaction de données non traitées délivrées en retour par l'élément de réseau en réponse à la demande d'acquisition de données non traitées ;
lorsque les informations de rétroaction de données non traitées ne véhiculent pas les données à acquérir, la restauration d'un nouveau nombre maximal de répétitions de la demande d'acquisition de données non traitées, le nouveau nombre maximal de répétitions étant inférieur au nombre maximal courant de répétitions ; et l'envoi de la demande d'acquisition de données non traitées véhiculant le nouveau nombre maximal de répétitions à l'élément de réseau.

3. Procédé selon la revendication 1, dans lequel le nombre maximal des OID pouvant être traités par l'élément de réseau qui mémorise les données à acquérir est acquis de la manière suivante par :

   acquisition d'un type d'équipement de l'élément de réseau conformément à une adresse de protocole Internet, IP, de l'élément de réseau et à une relation de correspondance prémémorisée entre des adresses IP et des types d'équipement ; et
   acquisition d'un nombre maximal d'OID pouvant être traités correspondant au type d'équipement conformément à une relation de correspondance prémémorisée entre un type d'équipement et un nombre maximal d'OID pouvant être traités.

4. Procédé selon la revendication 1, dans lequel la détermination du nombre maximal courant de répétitions de la demande d'acquisition de données non traitées conformément au premier nombre et au nombre maximal des OID pouvant être traités par l'élément de réseau est particulièrement mise en oeuvre par :
   détermination du nombre maximal courant de répétitions de la demande d'acquisition de données non traitées en tant que valeur arrondie par excès d'un rapport du nombre maximal des OID pouvant être traités par l'élément de réseau au premier nombre.

5. Procédé selon la revendication 1, dans lequel la régulation du nombre maximal courant de répétitions conformément au second nombre des OID dont les types de paramètre sont les types de données longues et au premier nombre comprend :

   la détermination d'un poids de régulation du nombre maximal courant de répétitions comme étant un rapport du second nombre au premier nombre ; et
   la régulation du nombre maximal courant de répétitions conformément au poids de régulation du nombre maximal courant de répétitions.

6. Procédé selon la revendication 5, dans lequel le nombre maximal courant de répétitions est régulé conformément au poids de régulation du nombre maximal courant de répétitions par le biais de la formule suivante :

$$R' = Max\left\{ \lceil (1 - W) * R \rceil, R_0 \right\},$$

dans laquelle $R'$ est un nombre maximal courant de répétitions régulé, $W$ est le poids de régulation du nombre maximal courant de répétitions, $R$ est le nombre maximal courant de répétitions, $\lceil (1 - W) * R \rceil$ représente une valeur arrondie par excès de $(1 - W) * R$, et $R_0$ est une valeur minimale prédéfinie du nombre maximal courant de répétitions.

7. Procédé selon la revendication 1, dans lequel les types de données longues comprennent : un type de chaîne d'affichage et/ou un type de chaîne d'OCTET.

8. Procédé selon la revendication 6, dans lequel la restauration du nouveau nombre maximal de répétitions de la demande d'acquisition de données non traitées, lorsque les informations de rétroaction de données non traitées ne véhiculent pas les données à acquérir, est particulièrement mise en oeuvre par : sélection d'une valeur maximale à partir d'une valeur arrondie par excès d'une moitié du nombre maximal courant de répétitions et de la valeur minimale prédéfinie du nombre maximal courant de répétitions, et détermination de cette dernière comme étant le nouveau nombre maximal de répétitions.

9. Dispositif de détermination d'un nombre maximal de répétitions d'une demande d'acquisition de données non traitées, comprenant :

   un module d'acquisition, conçu pour acquérir des informations d'identifiants d'objets, OID, correspondant à des données à acquérir lors d'une demande d'acquisition de données non traitées et à un nombre maximal d'OID pouvant être traités par un élément de réseau qui mémorise les données à acquérir,
   les informations d'OID comprenant un premier nombre d'OID correspondant aux données à acquérir ;
   le dispositif comprenant en outre :

   un module de détermination, conçu pour déterminer un nombre maximal courant de répétitions de la demande d'acquisition de données non traitées conformément au premier nombre et au nombre maximal des OID pouvant être traités par l'élément de réseau ; et

un premier module d'envoi, conçu pour envoyer la demande d'acquisition de données non traitées véhiculant le nombre maximal courant de répétitions à l'élément de réseau,

dans lequel les informations d'OID comprennent en outre des types de paramètre correspondant à chaque OID, et le dispositif comprenant en outre :

> un module d'évaluation, conçu pour évaluer l'existence éventuelle d'OID dont des types de paramètre sont des types de données longues conformément aux types de paramètre correspondant à chaque OID ; et
> un module de régulation, conçu pour, en présence des OID dont les types de paramètre sont des types de données longues, réguler le nombre maximal courant de répétitions conformément à un second nombre des OID dont les types de paramètre sont des types de données longues et au premier nombre, autrement, conserver le nombre maximal courant de répétitions inchangé.

┌──────────────────────────────────────────────────────────────┐
│ Acquire OID information corresponding to data to be acquired in a bulk │
│ data acquisition request to be sent and a maximum number of OIDs capable │
│ of being processed by a network element which stores the data to be acquired │
└──────────────────────────────────────────────────────────────┘  S100

┌──────────────────────────────────────────────────────────────┐
│ Determine a current maximum repetition │
│ number of the bulk data acquisition request │
└──────────────────────────────────────────────────────────────┘  S102

┌──────────────────────────────────────────────────────────────┐
│ Send the bulk data acquisition request carrying the current │
│ maximum replication number to the network element │
└──────────────────────────────────────────────────────────────┘  S104

FIG. 1

S200

Acquire an OID parameter list transmitted through
a bulk data acquisition request (SNMP Get Bulk)

S202

Acquire an equipment type corresponding to a network element agent according
to an IP address of the network element agent corresponding to the SNMP
Get Bulk operation

S204

Acquire an SNMP Get Bulk response capability of the
equipment type through a pre-stored configuration file

S206

Calculate a maximum replication number according to a length of the OID
parameter list and the response capability of the network element agent

S208

Acquire parameter types of each OID from the OID parameter list

S210

Whether there exists a long-data type or not — No

Yes

S212

Re-calculate the maximum replication number according to a proportion
of OIDs of the long-data type in the OID parameter list

S214

Transmit the SNMP Get Bulk request to the network
element Agent, and acquire a data block to be acquired

S216

Receive a response message of the network element agent

S218

Whether a response is successful or not — No

Yes

S220

No — Whether all data to be acquired has been acquired or not

Yes

Completed

S222

The maximum repetition number is halved

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8564409 B2

**Non-patent literature cited in the description**

- **EDITOR OF THIS VERSION: R PRESUHN BMC SOFTWARE et al.** Version 2 of the Protocol Operations for the Simple Network Management Protocol (SNMP); rfc3416.txt. *NETWORK WORKING GROUP RFC 1717, INTERNET SOCIETY (ISOC) 4,* 31 December 2002